Europäisches Patentamt

European Patent Office

Office européen des brevets

(11) Publication number: **0 014 784**
**B1**

## EUROPEAN PATENT SPECIFICATION

(45) Date of publication of patent specification: **16.02.83**

(51) Int. Cl.³: **F 16 H 1/32**

(21) Application number: **79300207.2**

(22) Date of filing: **12.02.79**

(54) Motion transmitting device.

(43) Date of publication of application:
**03.09.80 Bulletin 80/18**

(45) Publication of the grant of the patent:
**16.02.83 Bulletin 83/7**

(84) Designated Contracting States:
**BE CH DE FR**

(56) References cited:
**CH - A - 426 415**
**DE - C - 609 056**
**US - A - 3 307 434**
**US - A - 3 783 712**
**US - A - 4 023 440**

**ENGINEERING, vol. 218, March 1978 London,
G. B. F. W. KENNINGTON: "Quadrant drive",
pages 218—219**

(73) Proprietor: **PRECISION MECHANICAL
DEVELOPMENTS LIMITED**
**Balmain House Undercliffe Road**
**St. Helier Jersey Channel Islands (GB)**

(72) Inventor: **Kennington, Frank William**
**Les Ruisseaux House St. Brelade**
**Jersey Channel Islands (GB)**
Inventor: **Dimitracopoulos, Panayotis Constantine**
**P.O. Box N 7776 Lyford Cay**
**Nassau (BS)**

(74) Representative: **Rennie, Ian Malcolm et al,**
**BOULT, WADE & TENNANT 27 Furnival Street**
**London EC4A 1PQ (GB)**

Courier Press, Leamington Spa, England.

### Motion transmitting device

This invention relates to motion transmitting devices for transmitting rotary motion. It relates more particularly to torque convertors and speed changing devices.

Conventional gearing employs two meshing gears and engagement is usually provided by one tooth from each gear or, at most, between a few adjoining teeth. Therefore, at any given moment, one tooth or at best a few teeth transmit the entire load, the remaining teeth idly and wastefully rotating until their turn arrives to momentarily perform useful work. This waste is aggravated when large speed ratios are required. In such cases, rather than employing huge multitooth gears, several stages of conventional gearing are usually preferred or, alternatively, worm and gear or planetary gear mechanisms (such as epicyclic or hypocycloidal) are utilised, but in all such systems only one tooth per gear meshes (and transmits the load) at any given time and, when high torques are transmitted, this tooth may be subjected to very high loads.

Most of these problems were solved by our prior invention in rotary motion transmitting devices which is described in our United States Patent No. 4023440. In that specification constructions are described which make possible multitooth engagement and thereby multitooth transmission of load with all the ensuing advantages in size reduction, weight reduction and cost savings. Such constructions are capable of large speed reductions while they can simultaneously transmit high, or very high, loads. In fact, according to the above specification, devices may be constructed in which approximately one half the teeth of a gear may mesh at any given time and approximately one quarter may carry and share the load. Such devices in which the load is spread over the gear in this way have been termed "quadrant drives".

Briefly, each device according to the above-referred prior specification includes eccentric means, wheel means having portions shaped to engage with linked but independently movable meshing elements, a movement-limiting means including a datum member, wherein said eccentric means is arranged to cause said meshing elements sequentially to enter into and subsequently to move out of engagement with said portions of said wheel means, said meshing elements being individually guided by said movement-limiting means within predetermined limits of orbital motion relative to said datum member such that a plurality of adjacent areas of said meshing elements are always simultaneously in engagement with, and stationary relative to, a corresponding number of said portions. The wheel means typically is a toothed wheel and this construction enables a large number of teeth on the wheel to carry and share the load.

More particularly in that specification constructions are described in which approximately one half of the teeth of a gear mesh at any given time and approximately one quarter carry and share the load.

As is described in that specification, in a motion transmitting device, if one considers the four integers, namely the eccentric means, meshing means, the wheel means and the movement-limiting means, one of these integers may be driven to provide a rotational input and another provides a rotational output. Two such motion transmitting devices may be combined into a two-stage system by making the output of one device drive the input of a second device.

The present invention is concerned with improvements to the devices described in the aforementioned specification.

According to the present invention, a motion transmitting device including eccentric means, wheel means having portions shaped to engage with linked but independently movable meshing elements, a movement-limiting means including a datum member, and wherein said eccentric means is arranged to cause said meshing elements sequentially to enter into and subsequently to move out of engagement with said portions of said wheel means, said meshing elements being individually guided by said movement limiting means within predetermined limits of orbital motion relative to said datum member such that a plurality of adjacent areas of said meshing elements are always simultaneously in engagement with, and stationary relative to, a corresponding number of said portions, is characterised in that said movement-limiting means includes a plurality of separate connector elements, first profiles on said datum member and second profiles on said meshing elements, each of said connector elements being movable with respect to and in engagement with the respective first and second profiles, these profiles holding the connector elements in captive dependency, but being shaped so that, by relative movement of the connector elements along the two profiles, the engaging meshing elements are constrained to follow said orbital motion.

To explain the present invention, it is convenient to consider a more specific construction in which the movement-limiting means comprise rollers on the meshing elements engaged by apertures in a datum plate (constituting said datum member). These apertures correspond to the capturing means of the aforementioned specification and may be of ovoid form arranged to permit of the relative movement of the rollers in the apertures. The aforementioned meshing elements may comprise a chain of hingedly connected links with the rollers extending into further ovoid apertures in the links, each link having two teeth for engaging the aforementioned wheel means. The teeth on such a chain may be similar in some respects to those on the type of chain known as a "silent chain".

Compared to the above-referred prior invention, particular advantages arise with the construction of the present one, specifically:

The meashing elements of the prior specification were typically pins which were performing three principal functions, namely:

a) they were meshing with the teeth of the toothed wheel (gear or sprocket);

b) their protruding portions constituted the engaging means, entering into and captured by the capturing means such as the ovoid holes on the datum plate;

c) they were the hinge-pins which interlinked the side plates of the special chain loop.

This triple function imposed considerable limitations and contradictory requirements in the practical realisation of the invention.

On the other hand the present invention offers the advantage of a complete (and triple) separation of functions, allowing complete freedom in the optimisation of the components. Thus:

a) the meshing elements perform one only function, i.e. having the form of a properly designed tooth-like profile, they engage the toothed wheel (the gear);

b) the separate connector elements (being the engaging means), engage within the specially shaped first and second profiles (being the capturing means);

c) the pins have as their sole function the flexible interlinking of the meshing elements.

In addition, device according to the prior specification had a further considerable disadvantage: the engaging means (i.e. the protruding portions of the pins) were frictionally sliding within the contours of the capturing means (ovoid holes). To avoid such frictional losses, bearings were fitted around the pins, thus reducing their diameters and thereby reducing their capacity to carry loads.

On the other hand the present invention has the great advantage of permitting pure rolling motion of the connector elements within the contours of the first and second profiles, such rolling motion being possible without the interposition of bearings and, accordingly, without the weakening reduction of their diameters.

The separation of functions makes furthermore possible the design of the profiles of the meshing elements according to a special tooth-like form which makes possible an area contact with the corresponding teeth of the toothed wheel (by appropriate choice of the angles between the flanks of the tooth-like meshing elements and the corresponding angles of the teeth of the wheel).

A further careful choice of such angles may increase the friction between the meshing elements and the teeth of the wheel which, in this case, is a very desirable feature, as it counteracts possible forces acting radially outwardly, and therefore tending to separate the meshing elements from the teeth of the wheel.

A still further advantage of the present invention over the prior one constitutes the fact that because two separate profiles, for example two ovoid holes, are utilised to constrain each connector, this construction permits of utilising smaller ovoid holes on the datum plate even with increased roller diameter, thereby further increasing the strength and torque transmission characteristics of the system. Such relatively smaller ovoid holes result in a further advantage, namely they—indirectly—permit a larger than unity difference between the number of wheel teeth and the number of meshing elements, because such larger difference requires, of course, a correspondingly larger eccentricity, which larger eccentricity requires, in turn, larger ovoid holes which could not be easily accommodated within the available space of the datum plate of the prior specification but which, due to the above-mentioned smaller sizes of ovoid holes of the present invention, may be now easily accommodated.

The invention will now be more fully described with reference to the accompanying drawings in which:—

Figure 1 is a longitudinal section through a torque convertor constituting one embodiment of the invention;

Figure 2 is a half section along the line 2—2 of Figure 1, showing only some of the components for clarity;

Figure 3 is a diagram showing a chain link, a part of a datum plate, as well as a connector element (or roller) interengaging two "ovoid holes";

Figure 4 is a sectional view taken along line 2—2 of Figure 1 with some of the components omitted for clarity;

Figure 5 is a top view of three links of a form of transmission chain for use in a torque converter of the invention, each link being made up of three link-plates;

Figure 6 illustrates the three links of Figure 5 placed between two parallel datum plates, as well as three connector elements (or rollers);

Figure 7 is an alternative form of a single link plate for use in a torque convertor according to the invention.

The basic principles of the quadrant drive are explained in the aforementioned specification. An important point in which the quadrant drive departs from the accepted gearing concepts is that it only employs one gear, while the equivalent of the conventional second gear is replaced by two sets of means, namely: one set of "meshing means" and one set of "movement-limiting means".

The meshing means are guided by the movement-limiting means to perform a special orbital motion, thus making possible that each of them engages tooth after tooth of the gear, the important fact being that approximately one quarter of the teeth (and approximately one quarter of the meshing means) always transmit the load.

Generally, the movement-limiting means include "engaging means" which are captured for limited, controlled motion within "capturing means".

In particular, a special, preferred, form of capturing means is an aperture of specially contoured profile, which has been named an "ovoid hole".

It must be noted that the "pitch circles" of special constituent parts intersect at two points, which is a radical departure from accepted gearing principles and which provides an analytical explanation of the multitooth engagement which takes place in devices built according to the quadrant drive principle.

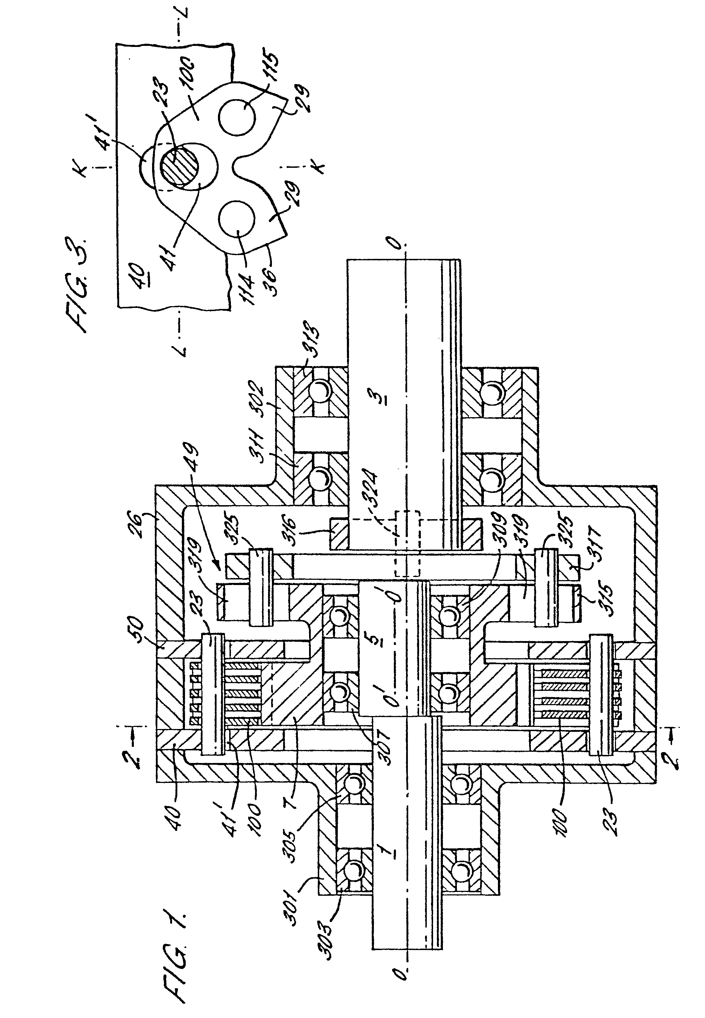

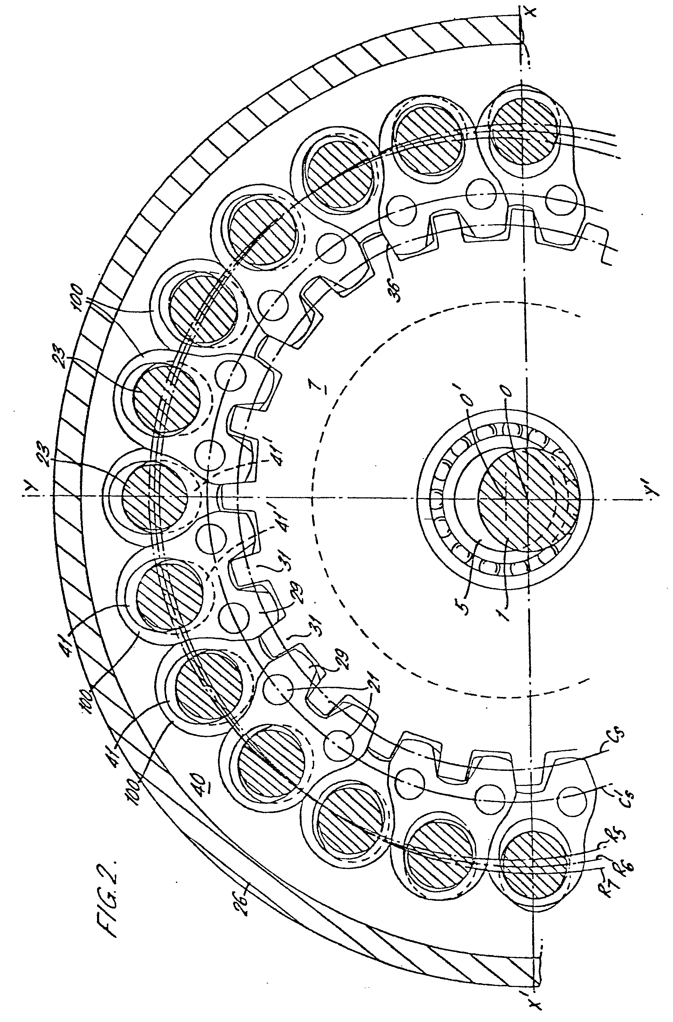

Referring now to Figures 1 and 2 of the accompanying drawings, a torque convertor has a housing generally designated by numeral 26; the housing is formed at one end with a cylindrical collar 301 which rotatably supports, by means of bearings 303 and 305, an input shaft 1 whose central longitudinal axis is O—O. Fixedly and eccentrically secured to input shaft 1 is an eccentric 5, which is a cylindrical shaft having a central longitudinal axis O'—O', the eccentricity being the distance O—O'. A sprocket or gear wheel 7 is journalled for free rotation about the eccentric 5 by means of bearings 307 and 309. The gear 7 is formed with teeth 31 which are capable of meshing with a series of "meshing elements" which, in the present embodiment, are suitably shaped (tooth-like) profiles 29 of special links. These links are hingedly interconnected to one another in a chain-like fashion, thus forming a special form of "flexible transmission loop" or "flexible transmission member".

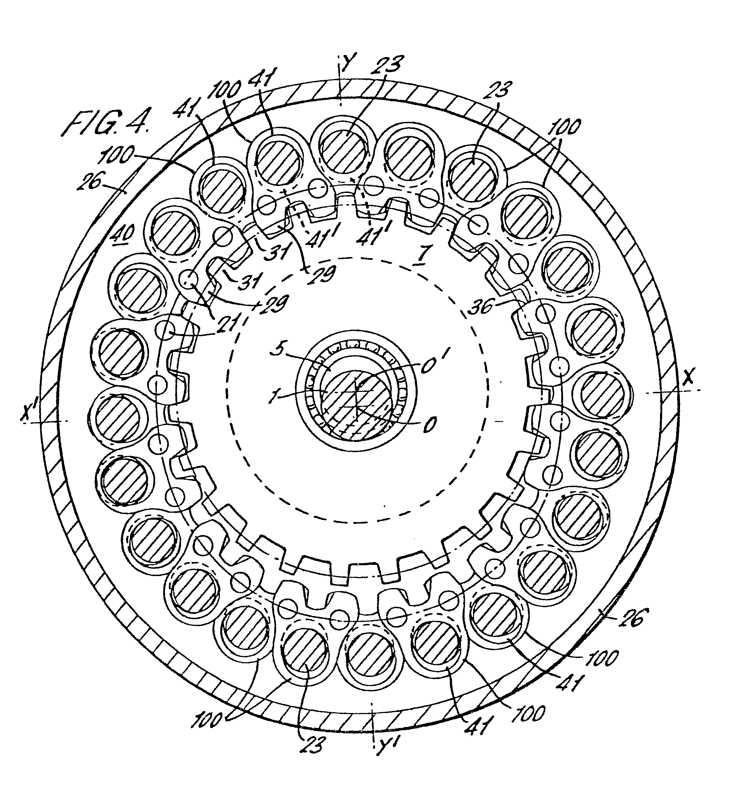

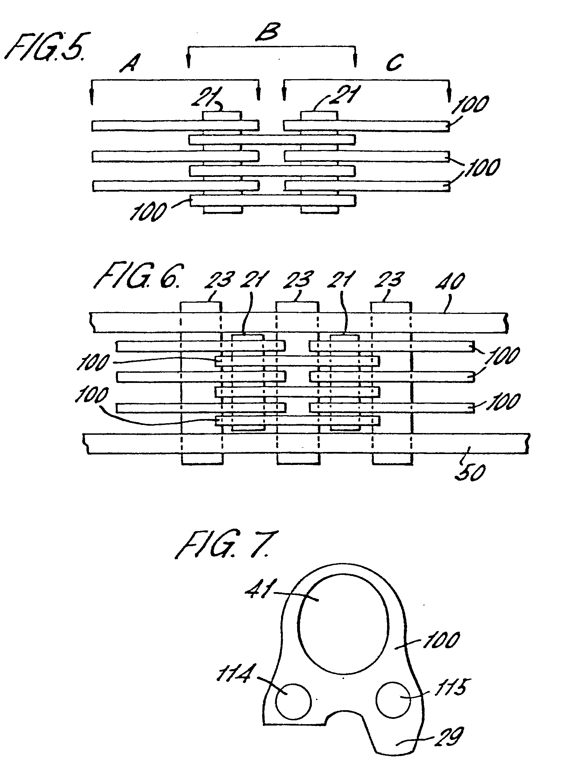

Each chain-link is preferably made up of several link plates 100 (of relatively small thickness) arranged parallel to one another and secured together by chain-pins 21, which pins 21 also serve to hingedly interconnect successive links of the abovementioned special transmission loop. To facilitate such interconnection, the link plates of successive links are preferably interleaved. For example, Figure 5 shows three chain-links A, B, C, each made up of three interleaved link plates 100, interconnected by means of chain pins 21.

It is noted that each link is formed with an opening 41 (of carefully designed shape and size), referred to as an "ovoid hole". A cylindrical "connector element", or "roller" 23 freely passes through such ovoid hole 41 and interconnects (by also freely passing through it) a second ovoid hole 41' located in a datum plate 40, as it is more clearly shown in Figures 1, 3 and 6.

There is at least one more meshing element, i.e. tooth 29 (also one more set of ovoid holes 41, 41' and roller 23) than there are gear teeth 31, so that while the meshing elements 29 and gear teeth 31 mesh above the diametric line X—X' (Figure 2), they progressively get out of mesh below it (see Figure 4). In this manner the special transmission loop of the invention is slack below the line X—X', which allows successive meshing elements 29 to pass over the tips of gear teeth of the diametric line Y—Y', as shown in Figure 4.

The above-described embodiment of the invention operates in a fashion somewhat similar to the known hypocycloidal gearing mechanism, but with substantial physical and functional differences: physical in so far as it has different constituent parts and components, and functional because multitooth engagement occurs over two quadrants and transmission of load over one (quadrant X'OY). ·

Specifically, the operation is as follows: as the input shaft 1 rotates, so does the eccentric 5 which, in turn, forces the gear 7 to rotate eccentrically. Accordingly, gear teeth 31 move further and further away from the axis O—O and, therefore, it is necessary to allow the link plates 100 to move in a radial direction. But since there is at least one more meshing element 29 (and set 41, 41' and 23) than there are gear teeth 31, and in order to permit the progressive engagement of every meshing element 29 with gear tooth 31 after gear tooth 31, it is also necessary to allow a tangential motion of the link plates 100.

The combination of such radial and tangential motions produces an "orbital" motion (or "wobbling" motion), which every link plate 100 must follow. This "orbital" or "wobbling" motion, is a highly organised one and is forced upon the link plates 100 (and thereby upon the meshing elements 29) by the "movement-limiting means", which in this case, are: the ovoid holes 41 and 41', constituting the "capturing means" and the connector elements (or rollers) 23, constituting the "engaging means".

Therefore, the shapes and sizes of these ovoid holes 41 and 41' are carefully designed to contain and guide the meshing elements 29 to perform the above-stated orbital (or wobbling) motions.

The speed reduction of such a device is quite high and is given by the formula:

$$\frac{Ng}{Ne-Ng}$$

where:
Ng: is the number of gear teeth 31, and
Ne: is the number of meshing elements 29.

The output is the eccentrically rotating gear 7, and it is therefore usually necessary to restore a coaxial to the input shaft 1 rotation. This may be accomplished through any of the well-known coupling means, for example by the Oldam coupling generally designated by numeral 49 which, in turn, drives the output shaft 3.

This output shaft 3 is rotatably supported through bearings 311 and 313 to collar 302 forming part of housing 26. In this manner both input shaft 1 and output shaft 3 are coaxially arranged. The Oldam coupling includes members designated by numerals 315, 317 and 316 interconnected by means of one set of pins 325 and a second set of pins 324, in the usual manner, the details of construction of such Oldam coupling being well known in the art, need no further description.

It is important to point out that in quadrant drives, that is in devices according to the prior and the present invention, unlike conventional gearing, during the engaging two quadrants (i.e. above the diametric line X—X'), the gear teeth 31 practically "lock" with the corresponding meshing elements 29, there being no movement between them. This, of course, constitutes a still further advantage of considerable practical significance.

Advantages of the present invention

Compared to the prior specification, particular advantages arise with constructions according to the present invention, including the following:

In the embodiments according to aforementioned United States Patent No. 4023440, the meshing elements (usually pins) were performing three principal functions, namely, a) they were meshing with the gear teeth of the sprocket,

b) they were the engaging means (of the movement-limiting means) which were engaging the ovoid holes,

c) they were interlinking the side plates of the flexible transmission loops (i.e. the transmission chains).

This triple function imposed contradictory requirements and considerable design limitations.

However, in constructions according to the present invention, there is a complete separation of these three functions, which permits great freedom of design choices. Thus,

1. The chain teeth 29 may be appropriately shaped in order to achieve an area contact with the gear teeth 31 (compared to the line contact possible according to the prior invention).

2. In some portions of the engaging quadrant, in many quadrant drive devices, there may exist the very undesirable tendency for the meshing elements (such as teeth 29 of links 100) to be pushed outwardly by a combination of forces. In devices according to the present invention, the triple separation of functions permits the counterbalancing of these outward forces by designing the shape of the teeth 29 so that their pressure angle, that is the angle between an engaging flank such as that shown at 36 and the radial line to the centre of the meshing toothed wheel 7, is small or, in fact, approaches zero (see Figure 2).

3. The sole function of pins 21 is to interlink the plate elements 100, this affording an additional freedom of design.

4. The engaging means become the connector elements or roller 23 whose sole function is now to engage and interconnect the ovoid holes 41 and 41', this feature affording a still further freedom in design of considerable importance. Thus, since the radial distance of the ovoid holes 41 in the link or the ovoid holes 41' in the datum plate 40 is greater than the radial distance of holes 114 and 115 from the centre O of the rotating input shaft (Figure 2), it is possible to increase the diameter of such a separate roller 23, to better withstand bending moments.

Likewise, the location of ovoid holes 41 on the link plates may be selected as dictated by design considerations.

5. Generally, by the use of double ovoid holes, i.e. separate ovoid holes in the datum plate 40 and the link plates 100, as shown in Figure 3, the ovoid holes are smaller (for a given eccentricity) than in a construction according to the aforementioned prior invention having single ovoid holes. The smaller ovoid holes make the construction of stronger link plates and datum plates. Thus, referring to Figure 3, the dimension of the ovoid holes in the direction K—K less the roller diameter may be approximately halved compared to that of a single ovoid construction and, likewise, the dimension in the direction L—L less the roller diameter may also be halved.

6. A still further advantage of the relatively smaller ovoid holes is that they make possible constructions having a larger than unity difference between the number of wheel teeth and the number of meshing elements, such larger difference requiring a correspondingly larger eccentricity, which larger eccentricity requires, in turn, larger ovoid holes (which could not be easily accommodated within the available space of the datum plate of the single hole arrangement of the prior specification) while the smaller double holes of the present invention are more easily accommodated within the available space.

7. The triple separation of functions allows much greater design freedom, permitting the optimisation of shapes, sizes and locations of pins 21, connector elements (rollers) 23, ovoids 41, and 41', gear teeth 31, link plate teeth 29 and all other components.

8. A still further advantage of the double ovoid holes is that, under certain conditions, it is possible to have a pure rolling motion of the rollers 23 within the ovoid holes, i.e. a motion with, almost, no frictional losses.

In constructions according to the prior specification, when only one ovoid hole was employed, the engaging means (i.e. the pins) slide within such single ovoid holes and, therefore, to avoid frictional losses, journal bearings were placed around them, necessitating a reduction of the pin diameters and thereby reducing their capacity to carry loads.

However, in constructions according to the present invention such bearings are no longer necessary because pure rolling motion of the pins is possible if the diameter of the rollers 23 and the sizes of such ovoid holes 41 and 41' are properly chosen.

It must be first explained that the two ovoid holes 41 and 41' may be of different shapes and sizes. However, when they have different shapes and/or sizes the rollers 23 engaging them will again not have a pure rolling motion.

Therefore, one condition for maintaining pure rolling motion of rollers 23 is that the two ovoids 41 and 41' be of substantially the same size and shape and since the ovoid holes are not circular, one set of ovoid holes 41' should be inverted relatively to the other set of ovoid holes 41, as shown in Figure 3.

Another way of maintaining pure rolling motion of rollers 23 is to have such rollers of stepped diameter with the different diameter portions engaging different sized ovoid holes.

In conventional gearing the pitch circles of two engaging gears meet at one and only one point and this accounts for the basic fact that substantially only one tooth per gear engages and transmits all the load.

On the other hand, in devices employing the quadrant drive principle, i.e. in devices according to the present invention and also in devices described in the aforementioned prior specification, regardless of the total number of teeth, one half of them engage and one quarter share the load. This happens because the pitch circles overlap, i.e. intersect one another at two points, which constitutes a unique feature of quadrant drives, and a radical departure from accepted concepts regarding gearing devices.

In the prior construction, using single ovoid holes, for example ovoid holes in the datum plate, the motion can be analysed by reference to two intersecting circles, one being the pitch circle of the gear (which therefore gyrates with it), the other being the locus of the design centres of the ovoid holes, such a locus being a circle whose centre lies on the longitudinal axis of the input shaft.

In the arrangement of the present invention there are three intersecting circles $R_5$, $R_6$ and $R_7$ (see Figure 2). More explicitly, whilst the teeth on the chain links 100 are in meshing engagement with the gear 7, there is no relative movement between the gear teeth and the chain links and the pitch circle $C_s$ of the gear may be transposed, for analysis purposes, to circle $R_5$, (centre of ovoid holes on links 100) and since the gear 7 eccentrically gyrates, so does circle $R_5$. Circle $R_7$ is stationary, since it is the locus of the design centres of the ovoids on the stationary datum plate 40. The rollers 23 however, whilst drivingly engaged, have centres whose locus is disposed along the arc of a third circle $R_6$ which also eccentrically gyrates together with circle $R_5$ and, consequently, both circles $R_5$ and $R_6$ eccentrically gyrate with respect to circle $R_7$, each intersecting this circle $R_7$ at two points (the actual location of which moves gradually through the cycle of operation).

In fact, when a condition of pure rolling motion (of rollers 23 within the double ovoids 41 and 41') exists, all three circles $R_5$, $R_6$ and $R_7$ intersect one another at the same two points, as shown in Figure 2.

It must be noted that whilst the teeth on the chain links 100 are in meshing engagement with the gear 7, (that is above axis X—X' of Figure 2) since there is no relative movement between gear teeth and the chain links, the three circles $C_s$, $C_s'$ and $R_5$ are all concentric circles with centres at O'.

While each chain link and link plate was shown as carrying two meshing elements, more than two are equally well possible. In fact, in view of the interleaving of link plates, there are cases where one meshing element per link plate may be preferred, as shown in Figure 7.

Generally, while a difference of unity between the number of meshing elements 29 and gear teeth 31 was described and illustrated in the chosen example, a greater difference may be employed if so desired.

While simple embodiments have been described above and illustrated in the Figures in order to explain the principle of the invention, it is possible to reduce to practice this new concept in quite different devices. Accordingly, it is not intended to exclude such different devices or any modification, change, alternative arrangement of parts and components, which fall within the scope of the present invention.

**Claims**

1. A motion transmitting device including eccentric means (5), wheel means (7) having portions (31) shaped to engage with linked but independently movable meshing elements (29), and movement-limiting means including a datum member (40), wherein said eccentric means is arranged to cause said meshing elements sequentially to enter into and subsequently to move out of engagement with said portions of said wheel means, said meshing elements being individually guided by said movement-limiting means within predetermined limits of orbital motion relative to said datum member such that a plurality of adjacent areas of said meshing elements are always simultaneously in engagement with, and stationary relative to, a corresponding number of said portions, characterised in that said movement-limiting means includes a plurality of individual connector elements (23), first profiles (41') on said datum member (40) and second profiles (41) on said meshing elements (29), each of said connector elements being movable with respect to and in engagement with the respective said first (41') and said second (41) profiles, these profiles holding the connector elements in captive dependency, but being shaped so that, by relative movement of the connector elements (23) along the two profiles (41', 41), the engaging meshing elements are constrained to follow said orbital motion.

2. A motion transmitting device as claimed in claim 1 wherein each connector element (23) is shaped to roll along its associated first profile (41') and its associated second profile (41).

3. A motion transmitting device as claimed in claim 2 wherein each connector element (23) is a cylindrical element of uniform diameter.

4. A motion transmitting device as claimed in claim 1 wherein said movable meshing elements (29) together comprise an endless transmission loop of flexible material.

5. A motion transmitting device as claimed in claim 1 wherein said movable meshing elements (29) together comprise a plurality of hingedly connected links, each formed with at least one tooth.

6. A motion transmitting device as claimed in claim 1 wherein a guide surface in the form of a closed loop (41) is provided on said meshing elements to constitute one of said second profiles (41).

7. A motion transmitting device as claimed in claim 1 wherein each of said first profiles (41') on said datum member (40) is a guide surface in the form of a closed loop (41').

8. A motion transmitting device as claimed in claim 7 wherein each of said first profiles (41') has a design centre and all such design centres lie on the circumference of a circle ($R_7$).

9. A motion transmitting device as claimed in claim 1 wherein at least one of said first (41') and second (41) profiles are of ovoid form.

10. A motion transmitting device as claimed in claim 1 wherein the first (41') and second (41) profiles comprise ovoid holes of different sizes and wherein each connector element (23) is a roller of stepped diameter, with different diameter portions engaging the different sized ovoid holes constituting the first and second profiles.

**Patentansprüche**

1. Bewegungsübertragungsvorrichtung mit einem Exzenterelement (5), einem Radelement (7), das Teile (31) hat, die so geformt sind, daß sie mit gelenkig verbundenen aber unabhängig beweglichen Eingriffelementen (29) in Eingriff bringbar sind, und mit einer Bewegungsbegrenzungsanordnung, zu der ein Bezugselement (40) gehört, wobei das Exzenterelement so angeordnet ist, daß es die Eingriffelemente der Reihe nach in Eingriff mit den genannten Teilen des Radelements und danach außer Eingriff mit diesen Teilen treten läßt, und wobei die Eingriffelemente einzeln von der Bewegungsbegrenzungsanordnung in vorgegebenen Grenzen einer kreisenden Bewegung relativ zu dem Bezugselement derart geführt sind, daß stets mehrere benachbarte Bereiche der Eingrillelemente gleichzeitig im Eingriff in und stationär zu einer entsprechenden Anzahl der genannten Teile sind, dadurch gekennzeichnet, daß die Bewegungsbegrenzungsanordnung mehrere einzelne Verbindungselemente (23), erste Profile (41') an dem Bezugselement (40) und zweite Profile (41) an den Eingriffelementen (29) umfaßt und daß jedes Verbindungselement bezüglich zu und im Eingriff mit den entsprechenden ersten (41') und zweiten (41) Profilen bewegbar ist und diese Profile die Verbindungselemente gefangen halten, aber derart geformt sind, daß durch eine Relativbewegung der Verbindungselemente (23) entlang den zwei Profilen (41', 41) die eingreifenden Eingriffelemente gezwungen werden, die kreisende Bewegung auszuführen.

2. Bewegungsübertragungsvorrichtung nach Anspruch 1, dadurch gekennzeichnet, daß jedes Verbindungselement (23) derart geformt ist, daß es entlang seinem zugeordneten ersten Profil (41') und seinem zugeordneten zweiten Profil (41) rollt.

3. Bewegungsübertragungsvorrichtung nach Anspruch 2, dadurch gekennzeichnet, daß jedes Verbindungselement (23) ein zylindrisches Element mit gleichbleibendem Durchmesser ist.

4. Bewegungsübertragungsvorrichtung nach Anspruch 1, dadurch gekennzeichnet, daß die beweglichen Eingriffelemente (29) zusammengenommen ein endloses Transmissionsband aus einem flexiblen Material darstellen.

5. Bewegungsübertragungsvorrichtung nach Anspruch 1, dadurch gekennzeichnet, daß die beweglichen Eingriffelemente (29) miteinander eine Mehrzahl von gelenkig verbundenen Gliedern darstellen, wobei jedes Glied mit wenigstens einem Zahn geformt ist.

6. Bewegungsübertragungsvorrichtung nach Anspruch 1, dadurch gekennzeichnet, daß an den Eingriffelementen eine Führungsfläche in der Form einer geschlossenen Schleife (41) geformt ist, um eines der zweiten Profile (41) zu bilden.

7. Bewegungsübertragungsvorrichtung nach Anspruch 1, dadurch gekennzeichnet, daß jedes erste Profil (41') an dem Bezugselement (40) eine Führungsfläche in der Form einer geschlossenen Schleife (41') ist.

8. Bewegungsübertragungsvorrichtung nach Anspruch 7, dadurch gekennzeichnet, daß jedes erste Profil (41') einen Konstruktionsmittelpunkt hat und alle diese Konstruktionsmittelpunkte auf dem Umfang eines Kreises ($R_1$) liegen.

9. Bewegungsübertragungsvorrichtung nach Anspruch 1, dadurch gekennzeichnet, daß mindestens eines der beiden Profile (41', 41) eiförmig ist.

10.    Bewegungsübertragungsvorrichtung nach Anspruch 1, dadurch gekennzeichnet, daß die ersten (41') und zweiten (41) Profile eiförmige Löcher unterschiedlicher Größe umfassen und daß jedes Verbindungselement (23) eine Rolle mit abgestuftem Durchmesser ist, wobei die verschieden dicken Rollenteile in die unterschiedlich großen eiförmigen Löcher, die die ersten und zweiten Profile darstellen, greifen.

## Revendications

1. Dispositif de transmission de mouvement comportant un moyen excentrique (5), un moyen du type roue (7) présentant des parties (31) de forme voulue pour engrener avec des éléments d'engrenage liés mias mobiles indépendamment (29), et un moyen de limitation de mouvement comportant un organe de référence, dans lequel ledit moyen excentrique est agencé pour amener séquentiellement lesdits éléments d'engrenage à prendre et ultérieurement à quitter l'état d'engrènement avec lesdits parties dudit moyen du type roue, lesdits éléments d'engrenage étant individuellement guidés par ledit moyen limiteur de mouvement entre des limites déterminées de mouvement orbital par rapport audit organe de référence de façon que plusieurs zones adjacentes desdits éléments d'engrenage soient toujours simultanément en engrènement avec, et fixes par rapport à, un nombre correspondant desdites parties, caractérisé en ce que ledit moyen limiteur de mouvement comporte plusieurs éléments de liaison distincts (23) de premiers profils (41') prévus sur ledit organe de référence (40) et de seconds profils (41) prévus sur lesdits éléments d'engrenage (29), chacun desdits éléments de liaison étant mobile par rapport à et en engrènement avec les premiers profils (41') et seconds profils (41) respectifs, ces profils maintenant les éléments de liaison en dépendance de captivité, mais étant de forme telle que, par mouvement relatif des éléments de liaison (23) le long des deux profils (40, 40'), des éléments d'engrenage en engrènement sont cotraints de suivre ledit mouvement orbital.

2. Dispositif de transmission de mouvement selon la revendication 1, caractérisé en ce que chaque élément de liaison (23) a la forme voulue pour rouler le long du premier profil (41') et du second profil (41) qui lui sont associés.

3. Dispositif de transmission de mouvement selon la revendiction 2, caractérisé en ce que chaque élément de liaison (23) est un élément cylindrique de diamètre conforme.

4. Dispositif de transmission de mouvement selon la revendication 1, caractérisé en ce que lesdits éléments d'engrenage mobiles (29) constituent ensemble une boucle de transmission sans fin en matériau souple.

5. Dispositif de transmission de mouvement, selon la revendication 1, caractérisé en ce que lesdits éléments d'engrenage mobiles (29) constituent ensemble une pluralité de maillons reliés à articulation, sur chacun desquels est formée au moins une dent.

6. Dispositif de transmission de mouvement selon la revendication 1, caractérisé en ce qu'une surface de guidage sous forme de boucle fermée (41) est prévue sur lesdits éléments d'engrenage pour constituer l'un desdits seconds profils (41).

7. Dispositif de transmission de mouvement selon la revendication 1, caractérisé en ce que chacun desdits premiers profils (41') dudit organe de référénce (40) est une surface de guidage sous la forme d'une boucle fermée (41').

8. Dispositif de transmission de mouvement selon la revendication 7, caractérisé en ce que chacun desdits premiers profils (41') présente un centre nominal et tous ces centres nominaux sont situés sur la circonférence d'un cercle (R$_7$).

9. Dispositif de transmission de mouvement selon la revendication 1, caractérisé en ce que les uns au moins desdits premiers (41') et seconds (40) profils sont de forme ovoïde.

10. Dispositif de transmission de mouvement selon la revendication 1, caractérisé en ce que les premiers profils (41') et seconds profils (41) comprennent des trous ovoïdes de grandeurs différentes et en ce que chaque élément de liaison (23) est un rouleau à diamètre en gradin, les tronçons de diamètres différents portant contre les trous ovoïdes de grandeurs différentes constituant les premiers et seconds profils.

0014784

FIG. 3.

FIG. 1.

FIG.2.

FIG. 4.

FIG.5.

FIG.6.

FIG.7.